# EUROPEAN PATENT SPECIFICATION

(11) **EP 1 280 137 B1**
(45) Date of publication and mention of the grant of the patent: **29.12.2004**
(21) Application number: 01117940.5
(22) Date of filing: 24.07.2001
(51) Int. Cl.: G10L 17/00

(54) **Method for speaker identification**
Verfahren zur Sprecheridentifikation
Procédé de reconnaissance du locuteur

(43) Date of publication of application: 29.01.2003
(73) Proprietor: Sony International (Europe) GmbH, 10785 Berlin (DE)
(72) Inventor: Marasek, Krzysztof, Heinrich-Hertz-Str. 1, 70327 Stuttgart (DE); Tato, Raquel, Heinrich-Hertz-Str. 1, 70327 Stuttgart (DE); Kemp, Thomas, Heinrich-Hertz-Str. 1, 70327 Stuttgart (DE)
(74) Representative: Müller - Hoffmann & Partner

(56) References cited:
- EP-A- 1 076 329
- US-A- 6 006 175
- CAREY MICHAEL J ET AL: "Robust prosodic features for speaker identification" PROCEEDINGS OF THE INTERNATIONAL CONFERENCE ON SPOKEN LANGUAGE PROCESSING, XX, XX, vol. 3, 3 October 1996 (1996-10-03), pages 1800-1803, XP002170895
- NECIOGLU ET AL: "Perceptual relevance of objectively measured descriptors for speaker characterization" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 869-872, XP010279352 ISBN: 0-7803-4428-6
- GAUVAIN, LAMEL: "Identification of Non-Linguistic Speech Features" PROC. ARPA HUMAN LANG. & TECHNOLOGY, MORGAN KAUFMAN, [Online] April 1993 (1993-04), pages 1-6, XP002185341 Retrieved from the Internet: <URL:http://citeseer.nj.nec.com/gauvain93i dentification.html> [retrieved on 2001-12-12]

## Description

The present invention relates to a method for speaker identification and, more particular, to a method for speaker identification using voice quality features.

Nowadays, a large variety of equipment and appliances employ man-machine dialogue systems or the like to ensure an easy and reliable use of equipment by a human user or to check the identity in an entrance area or the like. Therefore, in many cases, the identification of a person based on a speech input only is necessary. Current and known speaker identification methods and systems only use a small amount of the information which is contained in a given speech input. These systems and methods generally use global descriptors of the speech signal or the like. In particular, they involve MFCC coefficients, short-time spectra, and/or the like. These systems compare these singular speech features to a given speaker data base. As only a small amount of the information contained in a given speech signal is evaluated by current methods and systems for speaker identification, recognition and identification rate is still far from being satisfyable.

It is therefore an object of the present invention to provide a method for speaker identification which has a particular high identification rate and which is particularly robust.

The object is achieved by a method for recognizing speech with the features of claim 1. Preferred embodiments of the inventive method for speaker identification are within the scope of the dependent subclaims. Additionally, the object is achieved by a system for speaker identification according to claim 11 and a computer program product according to claim 12.

In the inventive method for speaker identification, in particular in a method and/or in a system for recognizing speech, a speech input is received and/or preprocessed. Linguistic, paralinguistic, and/or extralinguistic speech features are extracted from said speech input. Speaker identification data are derived, compared, and/or stored which are based on said speech features.

It is a basic idea of the present invention to not only use a small section of purely acoustical parameters - such as spectral e. g. of the speech input in a short time range - but to also focus on linguistic, paralinguistic, and/or extralinguistic parameters. Consequently, a speaker can be identified much more thoroughly and reliably compared to prior art methods and systems. The inventive method is therefore based on the fact that these involved features carry much information about the personality and identity of the speaking person.

According to a preferred embodiment of the inventive method for speaker identification. syntactical, grammatical, semantical features, and/or the like are used as linguistic features or as contextual features when deriving speaker identification data. In particular, statistical features on the usage, distribution, and/or probability of speech elements, such as words, subword units, syllables, phonemes, phones, and/or the like, or combinations of them within said speech input are used as linguistic features or as non-acoustical features. In that case, particular preferences of the speaking person can be derived and be compared with a set of speakers already registered.

To ensure the proper function of an identification based on contextual parameters, it is preferred to involve a process of speech recognition, in particular to prepare the extraction of linguistic or contextual features and/or the like in accordance with an advantageous embodiment of the present invention.

In accordance with a further aspect of the present invention, prosodic features, voice quality features, and/or the like are used as paralinguistic or as acoustical features.

In particular, it is preferred to use pitch, pitch range, intonation attitude, loudness, speaking rate, phone duration, speech element duration features, and/or the like as prosodic features.

Additionally, spectral tilt features, amplitude difference features between first harmonic and first, second, and/or third formant, band width features of formants, amplitude of harmonic features, jitter features, shimmer features, spectral flatness features, harmonic-to-noise ratio features and/or the like are used as voice quality features.

Furtheron, phonation type, articulation manner, voice timbre, gender, age features, and/or the like are used as voice quality features in accordance with a further embodiment of the present invention.

As the speaking behavior of each person is formed by the social class and geographical region the person is living in, it is a further aspect of the present invention to use features describing the dialect and/or the sociolect of the speaker as paralinguistic features.

In a further advantageous embodiment of the present invention, a speaker data base is used to compare the obtained speaker identification data for a current speaker. In the case where the obtained speaker identification data indicate a speaker who is already known or registered, the speaker is said to be identified. In the case that, for the obtained speaker identification data, no known speaker can be found, the current speaker is said to be foreign or unknown, in which case - based on the obtained speaker identification data - said current speaker can be registered as a new speaker in said speaker data base.

It is a further aspect of the present invention to provide a system, an apparatus, a device, and/or the like for speaker identification which is in each case capable of performing and/or realizing the inventive method for speaker identification and/or of its steps.

Additionally, it is a further aspect of the present invention to provide a computer program product, comprising computer program means which is adapted to perform and/or to realize the inventive method for speaker identification or its steps when it is executed on a computer, a digital signal processing means, and/or the like.

The above-mentioned and further aspects of the present invention will become more elucidated taking into account the following remarks.

Voice quality features carry important information which can be used to increase the robustness and/or the recognition rate for a speaker identification system.

In prior art systems, speaker identification is performed by using global descriptors of the speech signal only. These comprise MFCC coefficients, short-time spectra, and/or the like. Actual systems do not try to find parameters related to the voice quality to increase the quality of the speaker identification. They concentrate rather on constructing a better classifier than on the proper parameterization of the speech signal or on prosodic features.

The present invention is based on the fact that the robustness of speaker identification is crucial for future speech-control systems. It is of special Importance to perform speaker identification as good as possible. Features related to voice quality may increase the robustness of speaker identification.

Speech as a medium of human communication conveys information between a speaker and a listener on several distinct layers.

The linguistic layers or linguistic parameters or features carry semantic information encoded in the language and its phonetic representation.

The paralinguistic layer or paralinguistic parameters or features of communication are non-linguistic and non-verbal. They give information about the speaker's current affective, attitudinal, or emotional state. Also information about the speaker's regional dialect and his characteristic sociolect are included in the paralinguistic layer. Control of the active participation of time-sharing in the conversation is also conducted by this layer. The paralinguistic markers, however, are in part culturally determined and their respective interpretation must be learned.

As a third layer, the extralinguistic layer or extralinguistic parameters or features are involved. They identify the speaker with respect to his/her gender, age, voice, the range of pitch and loudness as well as his/her habitual factors. In other words, the extralinguistic layer encompasses all physical and physiological characteristics of the speaker, including all organic features involved in the speech generation. Voice quality can be defined as the characteristic auditory coloring of an individual's voice derived from a variety of laryngeal and supralaryngeal features and running continuously through the individual's speech. The natural and distinctive tone of speech sounds produced by a particular person and yields a particular voice.

According to Fant's speech production model or the classification proposed by Lever, voice quality depends on laryngeal (phonation), supralaryngeal (articulatory), and overall muscular tension settings. The parameters describing phonatory setting in speech signals are for example: loudness, spectral tilt, amplitude differences between first harmonic and first, second, and third formant, band width of formants, amplitude of the first harmonic, jitter (pitch perturbation factors), shimmer (fluctuation of loudness), spectral flatness of PLC residual signal, harmonic-to-noise ratio, and/or the like. Articulation-related features are manifested mainly by formant location and band widths.

For carrying out the inventive method, the proposed system comprises a feature extraction unit and a classifier. Based on parameters extracted automatically from the speech input or a speech signal, the classifier tries to identify the speaker. The voice quality parameters can be combined with other features which are known in the art.

In the following, further advantages and aspects of the present invention will be described taking reference to the accompanying figure.

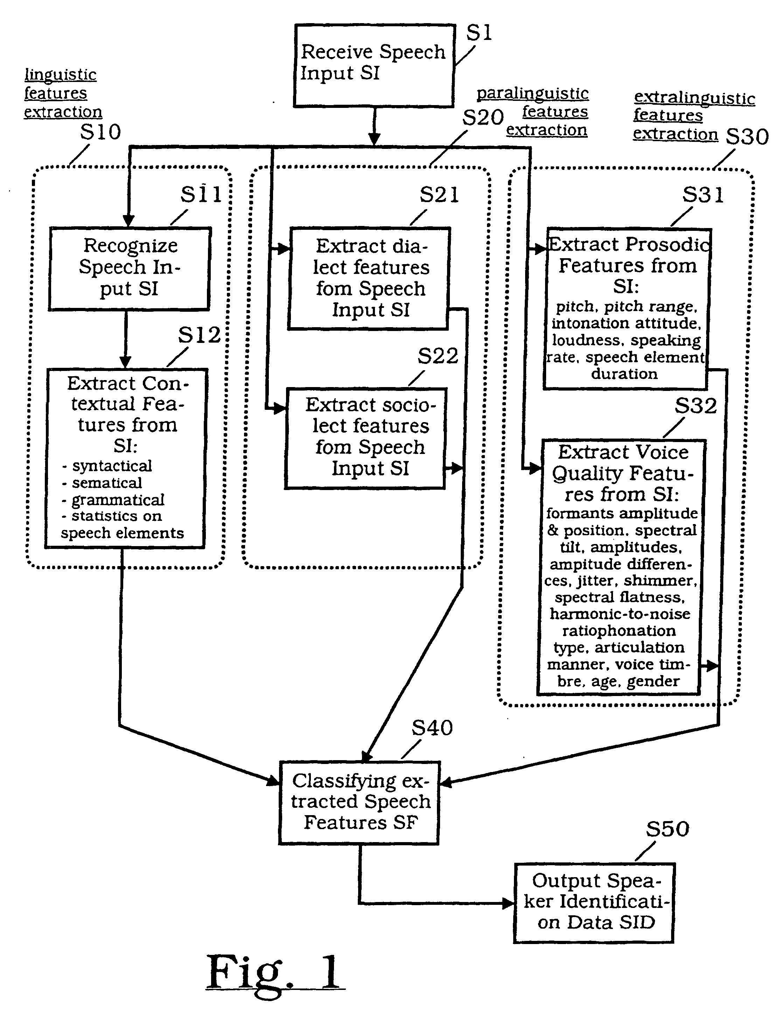

- **Fig. 1**: is a schematical block diagram describing a preferred embodiment of a method for speaker identification.

The schematical block diagram of Fig. 1 shows a preferred embodiment of the inventive method for speaker identification.

In step S1, speech input SI is received. In a first section S10 of the inventive method for speaker identification, linguistic features are extracted from the received speech input SI. In a second section S20 of the inventive method for speaker identification, paralinguistic features are extracted from the received speech input SI. Finally, in a third section S30, extralinguistic features are extracted from the given speech input SI. The sections S10, S20, and S30 can be performed parallely or sequentially on a given device or apparatus.

In the first section S10 for extracting linguistic features from the speech input SI, in a first step S11 the speech input SI is fed into a speech recognizer to analyze the content and the context of the received speech input SI. This is performed as an preparatory step for the following step S12 for extracting contextual features from said speech input SI, in particular syntactical, semantical, grammatical, and statistical information on particular speech elements. These contextual features are extracted to describe and identify, for instance, the speaker's speaking preferences or the like.

In the embodiment of Fig. 1, the second section S20 of the inventive method for speaker identification consists of two steps S21 and S22 to be performed independently from each other.

In the first step S21 of the second section S20 for extracting paralinguistic features, a possible included regional dialect is extracted and described by respective features.

In the second step S22 of the second section S20 for extracting paralinguistic features, features describing the sociolect of the current speaker are extracted.

In the third section S30 for extracting extralinguistic parameters or features from the given speech input SI, prosodic features and voice quality features are extracted from said speech input in the steps S31 and S32, respectively, which can be performed independently from each other. The prosodic features may include pitch, pitch range, intonation attitude, loudness, speaking rate, speech element duration and/or the like. Said voice quality features of step S32 may include spectral tilt, amplitudes, amplitude differences, jitter, shimmer, spectral flatness, harmonic-to-noise ratio features, phonation type, articulation manner, voice timbre, age, gender, features, and/or the like.

The extracted features from the linguistic, paralinguistic, and extralinguistic extraction schemes are then merged and combined in the following post-processing step of classifying the set of speech features SF of step S40 which results in the construction of speaker identification data SID of step S50 which can then be stored or compared or evaluated in some other sense.

## Claims

1. Method for speaker identification, wherein:
- speech input (SI) is received and preprocessed,
- extralinguistic speech features (SF) and at least one of paralinguistic and linguistic speech features (SF) are extracted from said speech input (SI), and
- speaker identification data (SID) are derived, compared, and stored which are in each case based on said at least one of paralinguistic and linguistic speech features (SF).

2. Method according to claim 1,
wherein at least one of syntactical, grammatical and semantical features are used as linguistic features.

3. Method according to any one of the preceding claims,
wherein at least one of statistical features on the usage, distribution, probability of speech elements - such as words, subword units, syllables, phonemes, phones - or combinations of them within said speech input (SI) are used as linguistic features.

4. Method according to any one of the preceding claims,
wherein a process of speech recognition is carried out, in particular to prepare the extraction of linguistic features.

5. Method according to any one of the preceding claims,
wherein at least one of voice quality features and prosodic features are used as extralinguistic features.

6. Method according to claim 5,
wherein at least one of phonation type, articulation manner, voice timbre, gender and age features are used as voice quality features.

7. Method according to any one of the claims 5 or 6,
wherein at least one of pitch, pitch range, intonation attitude, loudness, speaking rate, phone duration and speech element duration features are used as prosodic features.

8. Method according to any one of the claims 5 to 7,
wherein at least one of spectral tilt features, amplitude difference features between first harmonic and first, second, third formant, band width features of formants, amplitude of harmonic features, jitter features, shimmer features, spectral flatness features and harmonic-to-noise ratio features are used as voice quality features.

9. Method according to any one of the preceding claims,
wherein features with respect to a dialect or a socialect are used as paralinguistic features.

10. Method according to any one of the preceding claims,
wherein a speaker data base (SDB) is used to compare the obtained speaker identification data (SID) for a current speaker and wherein, for the case that said speaker identification data (SID) indicate that the current speaker has not been identified previously, a new speaker is registered in said speaker data base (SDB) based on said speaker identification data (SID).

11. System for speaker identification, comprising means for performing each of the steps of the method for speaker identification according to any one of the preceding claims 1 to 10.

12. Computer program product, comprising computer program means adapted to perform each of the steps of the method for speaker identification according to any one of the claims 1 to 10 when it is executed on a digital signal processing means.

13. Method for recognizing speech, comprising the method for speaker identification according to any one of preceding claims 1 to 10.

14. System for recognizing speech, comprising a system for speaker identification according to claim 11.

## Patentansprüche

1. Verfahren zur Sprecheridentifikation, wobei:
- eine Spracheingabe (SI) empfangen und vorverarbeitet wird,
- extralinguistische Sprachmerkmale (SF) und wenigstens eines von paralinguistischen und linguistischen Sprachmerkmalen (SF) von der Spracheingabe (SI) extrahiert wird, und
- Sprecheridentifikationsdaten (SID) abgeleitet, verglichen und gespeichert werden, welche in jedem Fall auf wenigstens eines der paralinguistischen und linguistischen Sprachmerkmalen (SF) basieren.

2. Verfahren gemäß Anspruch 1,
wobei wenigstens eines von syntaktischen, grammatikalischen und semantischen Merkmalen als linguistische Merkmale verwendet wird.

3. Verfahren gemäß einem der vorstehenden Ansprüche,
wobei wenigstens eines von statistischen Merkmalen der Benutzung, Verteilung, Wahrscheinlichkeit von Sprachelementen - wie Wörtern, Teilworteinheiten, Silben, Phonemen, Phonen - oder Kombinationen von solchen innerhalb der Spracheingabe (SI) als linguistische Merkmale verwendet werden.

4. Verfahren gemäß einem der vorstehenden Ansprüche,
wobei ein Verfahren zur Spracherkennung ausgeführt wird, insbesondere zur Vorbereitung der Extrahierung von linguistischen Merkmalen.

5. Verfahren gemäß einem der vorstehenden Ansprüche,
wobei wenigstens eines von Sprachqualitätsmerkmalen und prosodischen Merkmalen als extralinguistische Merkmale verwendet wird.

6. Verfahren gemäß Anspruch 5,
wobei wenigstens eines von Phonationsart-, Artikulationsweise-, Stimmklangfarbe-, Geschlechts- und Altersmerkmalen als Sprachqualitätsmerkmale verwendet wird.

7. Verfahren gemäß einem der Ansprüche 5 oder 6,
wobei wenigstens eines von Grundfrequenz-, Grundfrequenzwertebereichs-, Intonationsverhaltens-, Lautstärke-, Sprechraten-, Phondauer- und Sprachelementdauermerkmalen als prosodische Merkmale verwendet wird.

8. Verfahren gemäß einem der Ansprüche 5 bis 7,
wobei wenigstens eines von Spektralveränderungsmerkmalen, Amplitudenunterschiedsmerkmalen zwischen der ersten Harmonischen und dem ersten, zweiten, dritten Formanten, Bandbreitenmerkmalen von Formanten, Amplituden von harmonischen Merkmalen, Jittermerkmalen, Schwankungsmerkmalen, Spektralflachheitsmerkmalen und Harmonische-zu-Rauschen-Verhältnismerkmalen als Sprachqualitätsmerkmale verwendet wird.

9. Verfahren gemäß einem der vorstehenden Ansprüche,
wobei Merkmale bezüglich eines Dialekts oder eines Soziolekts als paralinguistische Merkmale verwendet werden.

10. Verfahren gemäß einem der vorstehenden Ansprüche,
wobei eine Sprecherdatenbank (SDB) zum Vergleichen der erhaltenen Sprecheridentifikationsdaten (SID) für einen aktuellen Sprecher verwendet wird und wobei für den Fall, dass die Sprecheridentifikationsdaten (SID) anzeigen, dass der aktuelle Sprecher zuvor nicht identifiziert wurde, ein neuer Sprecher in der Sprecherdatenbank (SDB) registriert wird, basierend auf den Sprecheridentifikationsdaten (SID).

11. System zur Sprecheridentifizierung, welches Einrichtungen aufweist zur Durchführung eines beliebigen der Schritte des Verfahrens zur Sprecheridentifikation gemäß einem der vorstehenden Ansprüche 1 bis 10.

12. Computerprogrammprodukt, welches eine Computerprogrammeinrichtung aufweist, eingerichtet zur Durchführung eines beliebigen der Schritte des Verfahrens zur Sprecheridentifikation gemäß einem der vorstehenden Ansprüche 1 bis 10, wenn es auf einer digitalen Signalverarbeitungseinrichtung ausgeführt wird.

13. Verfahren zur Spracherkennung, welches das Verfahren zur Sprecheridentifikation gemäß einem der vorstehenden Ansprüche 1 bis 10 aufweist.

14. System zur Spracherkennung, welches ein System zur Sprecheridentifikation gemäß Anspruch 11 aufweist.

## Revendications

1. Procédé d'identification du locuteur, où :
- le signal vocal d'entrée (SI) est reçu et prétraité,
- des particularités de locution (SF) extralinguistiques et au moins une particularité prise parmi des particularités de locution (SF) para linguistiques et linguistiques sont extraites dudit signal vocal d'entrée (SI), et
- des données d'identification du locuteur (SID) sont déduites, comparées et stockées, lesquelles, dans chaque cas, sont basées sur ladite ou lesdites particularités de locution (SF) paralinguistiques et linguistiques.

2. Procédé selon la revendication 1, où au moins une particularité prise parmi des particularités syntactiques, grammaticales et sémantiques sont utilisées au titre des particularités linguistiques.

3. Procédé selon l'une quelconque des revendications précédentes, où au moins une particularité prise parmi des particularités statistiques portant sur l'usage, la distribution, la probabilité d'éléments de locution, comme par exemple des mots, des unités de sous-mots, des syllabes, des phonèmes, des éléments de phonèmes, ou bien encore des combinaisons de ceux-ci prises à l'intérieur dudit signal vocal d'entrée (SI), sont utilisées au titre des particularités linguistiques.

4. Procédé selon l'une quelconque des revendications précédentes, où un processus de reconnaissance de la parole est effectué, en particulier pour préparer l'extraction de particularités linguistiques.

5. Procédé selon l'une quelconque des revendications précédentes, où au moins un élément pris parmi des particularités de qualité vocale et des particularités prosodiques sont utilisées au titre des particularités extralinguistiques.

6. Procédé selon la revendication 5, où au moins l'une des particularités suivantes, à savoir des particularités de type de phonation, de manière d'articuler, de timbre vocal, de sexe et d'âge sont utilisées au titre des particularités de qualité vocale.

7. Procédé selon l'une quelconque des revendications 5 et 6, où au moins l'une des particularités suivantes, à savoir la hauteur de son, la gamme de hauteur de son, l'intonation, la sonorité, le débit de parole, la durée des éléments phonèmes et la durée des éléments de locution, sont utilisés au titre des particularités prosodiques.

8. Procédé selon l'une quelconque des revendications 5 à 7, où au moins l'une des particularités suivantes, à savoir des particularités de pente spectrale, des particularités de différence d'amplitude entre premier harmonique et premier, deuxième, troisième formants, des particularité de largeur de bande de formants, des particularités d'amplitude d'harmoniques, des particularités de sautillement, des particularités de flottement, des particularités d'absence de relief spectral et des particularités de rapport harmonique-bruit, est utilisée au titre des particularités de qualité vocale.

9. Procédé selon l'une quelconque des revendications précédentes, où des particularités relatives à un dialecte ou à un socio-dialecte sont utilisées au titre des particularités paralinguistiques.

10. Procédé selon l'une quelconque des revendications précédentes, où on utilise une base de données de locuteurs (SDB) pour comparer les données d'identification de locuteur (SID) obtenues relativement au locuteur courant et où, dans le cas où lesdites données d'identification de locuteur (SID) indiquent que le locuteur courant n'a pas été précédemment identifié, un nouveau locuteur est enregistré dans ladite base de données de locuteurs (SDB) en fonction desdites données d'identification de locuteur (SID).

11. Système d'identification du locuteur, comprenant des moyens permettant d'effectuer chacune des opérations du procédé d'identification du locuteur, tel que défini dans l'une quelconque des revendications 1 à 10.

12. Programme produit d'ordinateur, comprenant des moyens de programmation d'ordinateur adaptés à l'exécution de chacune des opérations du procédé d'identification du locuteur tel que défini dans l'une quelconque des revendications 1 à 10, lorsqu' est exécutée sur un moyen de traitement de signaux numériques.

13. Procédé de reconnaissance de la parole, comprenant le procédé d'identification du locuteur tel que défini dans l'une quelconque des revendications 1 à 10.

14. Système de reconnaissance de la parole, comprenant un système d'identification du locuteur tel que défini dans la revendication 11.
